# EUROPEAN PATENT APPLICATION

(11) **EP 2 187 332 A1**
(43) Date of publication of application: **19.05.2010**
(21) Application number: 09251133.6
(22) Date of filing: 20.04.2009
(51) Int. Cl.: G06F 21/24, G06F 3/06

(54) **Storage area allocation method and a management server**

(30) Priority: 06.11.2008 JP 2008285460
(71) Applicant: Hitachi Ltd., Chiyoda-ku Tokyo (JP)
(72) Inventor: Sakaguchi, Akihiko, Chiyoda-ku Tokyo, 100-8220 (JP)
(74) Representative: Moore, Graeme Patrick

(57) **Abstract**

An object is to allocate a storage area to a business application by taking a security evaluation of the storage area and a security evaluation value of the business application into consideration. A management server (1) includes a business management table (121) to store a calculated security evaluation value (707) of a business application to be executed in a host (2) in association with information concerning the business application, and a management table (122) to store a calculated encryption level (805) of a virtual pool in a storage device (3) in association with information (801) concerning the virtual pool. The management server retrieves a virtual pool (302) having an encryption level which is the same in value as the evaluation value, and allocates the retrieved virtual pool to the business application.

## Description

### BACKGROUND OF THE INVENTION

The present invention relates to a storage area allocation method and a management server.

In recent years, importance of the data security has increased as the problems of the personal information protection and information leak are handled seriously. Therefore, as to data on a storage, access limitation using a password or the like is demanded. In addition, it is demanded to encrypt and store data in the storage in preparation for the case where hacking is conducted or the storage is stolen.

As regards such a security method, a data management apparatus which incorporates an encryption/decryption module in a storage device and which has the storage device for encrypting data and storing the encrypted data is disclosed (see, for example, JP-A-2005-115438).

If a physical disk is equipped with an encryption function and stored data is encrypted, however, then the I/O performance is degraded than an ordinary disk having no encryption function, because of overhead of encryption/decryption. Therefore, it becomes important to allocate a disk having an encryption level matched to a security level demanded by a business application, instead of always using a disk always an encryption level

In recent years, "thin provisioning" is drawing attention as a technique for using the storage capacity efficiently. The thin provisioning is a technique of managing the storage device collectively as a virtual pool (storage area) and generating a virtual volume on the virtual pool. At the time of generation, a physical disk is not allocated to the virtual volume. When accessed from the host, a physical disk is allocated to only the concerned area. By doing so, efficient operation of the storage becomes possible.

In the thin provisioning, the host computer (hereafter referred to as host) is not conscious of a physical disk and consequently the host cannot select a physical disk which has (or which does not have) an encryption function. This results in a problem that the host might allocate a physical disk having no encryption function to a business application which handles important data, or on the contrary, the host might allocate a physical disk having the encryption function to a business application which does not handle important data.

The present invention has been made in view of these circumstances, and a preferred aim thereof is to allocate a storage area to a business application by taking a security evaluation value of the storage area and a security evaluation value of the business application into consideration.

In order to try to achieve the preferred aim, the present invention has a feature that a business application is allocated to a storage area having a storage area security evaluation value equal to a business security evaluation value in the business application.

Other means for achieving the preferred aim will be described in embodiments suitably.

According to the present invention, a storage area can be allocated to a business application by taking a security evaluation value of the storage area and a security evaluation value of the business application into consideration.

Other objects, features and advantages of the invention will become apparent from the following descriptions of the embodiments of the invention taken in conjunction with the accompanying drawings.

### BRIEF DESCRIPTION OF THE DRAWINGS

FIG. 1 is a diagram showing a configuration of an information processing system according to an embodiment;
FIG. 2A is a diagram showing a memory configuration in a management server according to the embodiment;
FIG. 2B is a diagram showing a configuration of a storage device in a management server according to the embodiment;
FIG. 3 is a diagram showing a memory configuration in a host according to the embodiment;
FIG. 4 is a diagram showing a configuration of a storage device according to the embodiment;
FIG. 5 is a diagram showing an example of configurations of typical virtual pools and virtual volumes;
FIG. 6 is a diagram showing an example of configurations of virtual pools and virtual volumes according to the embodiment;
FIG. 7 is a diagram showing an example of a business management table according to the embodiment;
FIG. 8 is a diagram showing an example of a virtual pool management table according to the embodiment;
FIG. 9 is a diagram showing an example of an access information table according to the embodiment;
FIG. 10 is a diagram showing an example of a security information table according to the embodiment;
FIG. 11 is a flowchart showing a flow of business management table registration processing according to the embodiment;
FIG. 12 is a flowchart showing a flow of virtual pool encryption level calculation processing according to the embodiment;
FIG. 13 is a flowchart showing a flow of virtual volume allocation preprocessing according to the embodiment;
FIG. 14 is a flowchart showing a flow of virtual volume allocation processing according to the embodiment;
FIG. 15 is a flowchart showing a flow of logical volume addition processing according to the embodiment; and
FIG. 16 is a flowchart showing a flow of logical volume deletion processing according to the embodiment.

### DETAILED DESCRIPTION

An embodiment of the present invention will now be described in detail suitably with reference to the drawings.

### (System configuration)

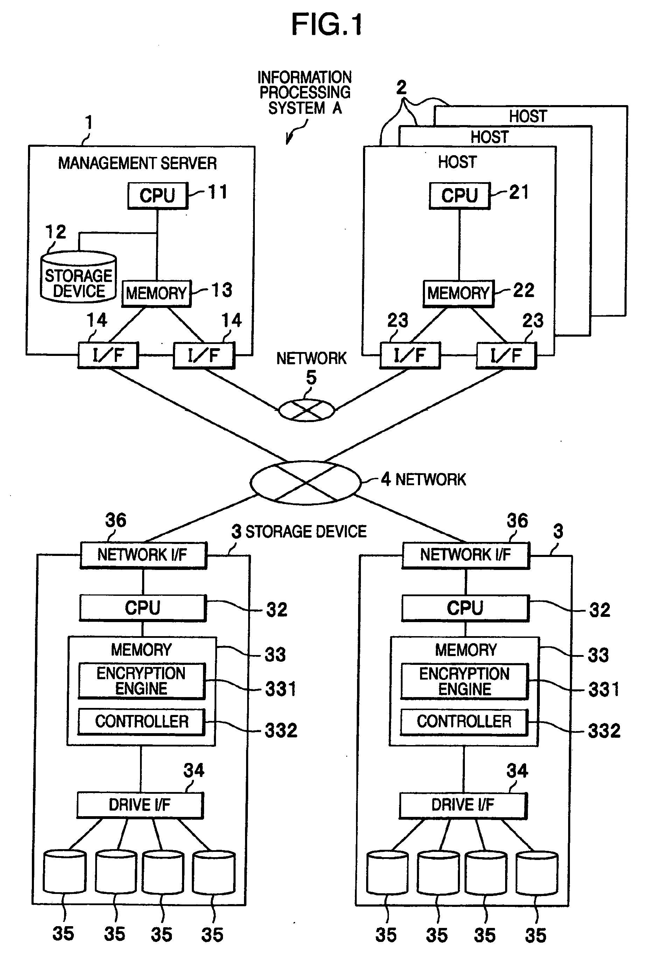

FIG. 1 shows a configuration of an information processing system according to the embodiment.

In an information processing system A, a management server 1, a plurality of storage devices 3 and a plurality of hosts (host computers) 2 are connected to each other via a network 4. Furthermore, the management server 1 and the hosts 2 are connected to each other via a network 5. The network 4 and the network 5 may be networks of any kind. For example, both the networks 4 and 5 may be IP (Internet Protocol) networks. Or the networks 4 and 5 may be different networks of different kinds. For example, the network 5 may be a SAN (Storage Area Network) and the network 4 may be an IP network.

The management server 1 also has a function of managing programs executed by the host 2 and managing states of the storage devices 3. The management server 1 also has a function of ordering a storage device 3 to generate a virtual pool 302/a virtual volume 303.

The management server 1 includes a semiconductor memory (memory 13) capable of storing various computer programs and control information, a CPU 11 which reads a computer program, control information, and data from a storage device 12 such as a hard disk drive onto the memory 13 and executes them, and at least one network interfaces (I/Fs 14) which serve as interfaces for the network 4 and the network 5.

Each host 2 is a computer having a function of issuing an input/output command for reading and writing data to a logical volume in a storage device 3. The hosts 2 may have similar hardware configurations or may have different hardware configurations. It is supposed that the hosts 2 have similar hardware configurations in the foregoing description.

The host 2 includes a semiconductor memory (memory 22) capable of storing various computer programs and control information, a CPU 21 which reads a computer program from the memory 22 and executes the computer program, and network interfaces (I/Fs 23) which serve as interfaces for the network 4 and the network 5.

Each storage device 3 includes a plurality of disk devices 35 for storing data. Each storage device 3 is a device having a function of writing data into the disk devices 35 or reading data from the disk devices 35 in response to an input/output command from a host 2. The storage devices 3 may have similar hardware configurations or may have different hardware configurations. It is supposed that the storage devices 3 have similar hardware configurations in the foregoing description.

By the way, it is desirable that each storage device 3 has a plurality of disk devices 35 and the disk devices 35 constitute a RAID (Redundant Array of Independent Disks). Storage devices such as flash memories, RAMs (Random Access Memories) or ROMs (Read Only Memories) may also be utilized instead of the disk devices 35. Since these storage devices have less mechanical parts as compared with the disk devices 35, these storage devices are excellent in the aspects of vibration, noise, power dissipation and response speed. Furthermore, both the disk devices 35 and semiconductor storage devices may be included. For example, a configuration having the disk devices 35 and non-volatile semiconductor storage devices is used. When writing is conducted frequently, the disk devices are utilized. When reading is conducted frequently, the non-volatile semiconductor devices are utilized. The disk devices 35 and non-volatile semiconductor storage devices can thus be used properly. Since the semiconductor storage devices are strong to vibration as compared with the disk devices 35, the semiconductor storage devices may be utilized without constituting the RAID.

Each storage device 3 includes a CPU 32 and a memory 33 as well, besides the disk devices 35. Each of the CPU 32 and the memory 33 may be either of one and a plurality in number. The memory 33 can have, for example, a cache area capable of temporarily storing data given and received between a disk device 35 and a host 2, and a control area capable of storing data and a computer program to control the storage device 3. The CPU 32 can read a computer program from the control area or a disk device 35, and execute the computer program.

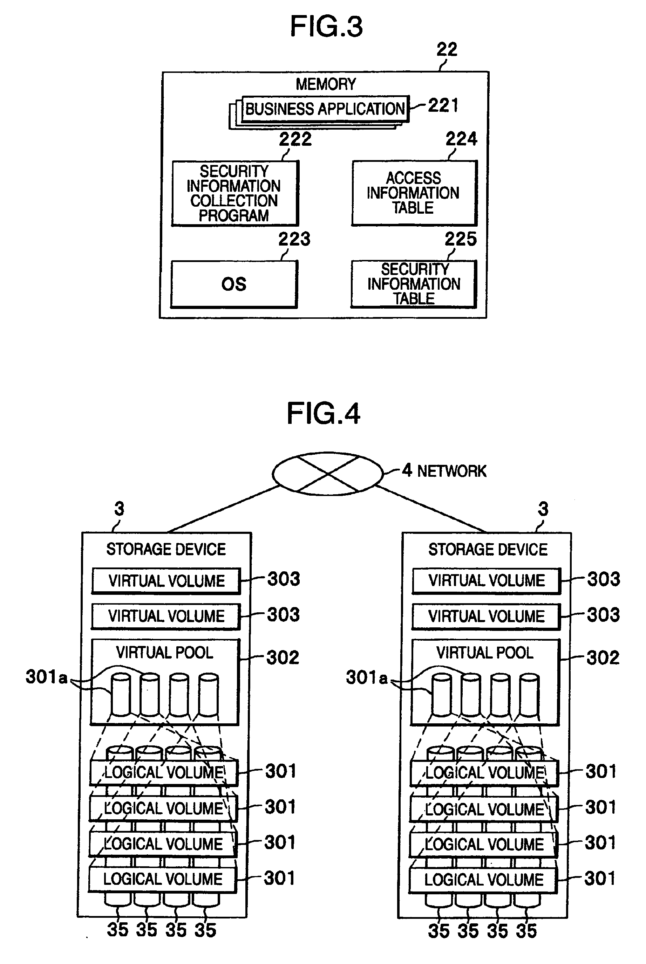

A controller 332 developed on the memory 33 and executed by the CPU 32 is a device for controlling operation of the storage device 3. The controller 332 is a program for conducting communication with a network interface (network I/F 36) for the network 4, and a drive interface (drive I/F 34) which reads data from or writes data into a disk device 35. In addition, the controller 332 conducts management on identifiers of the virtual volumes 303 identifiers of the logical volumes 301, and an identifier of the virtual pool 302, which will be described later with reference to FIG. 4, and a capacity in use.

Each storage device may include an encryption engine 331 for encrypting data to be written into a disk device 35. The encryption engine 331 is a computer program developed from a disk device 35 or the like on which the computer program is stored onto the memory 33 and executed by the CPU 32.

### (Management server configuration)

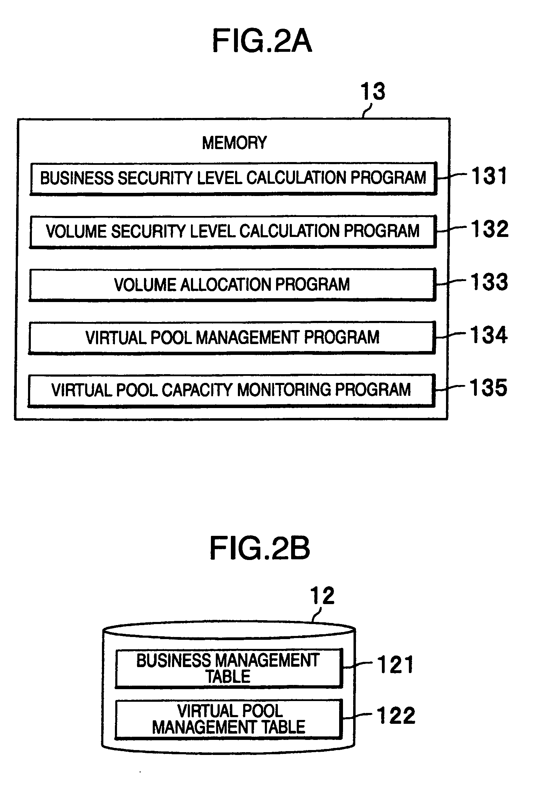

FIGS. 2A and 2B are diagrams showing a memory configuration and a storage device configuration in the management server according to the present embodiment. FIG. 2A is a diagram showing a configuration of the memory 13, and FIG. 2B is a diagram showing a configuration of the storage device 12.

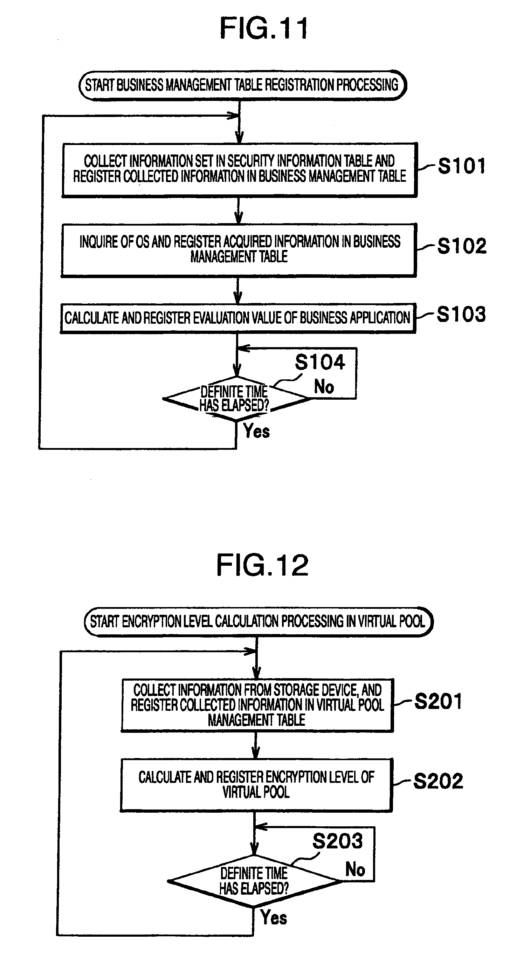

As shown in FIG. 2A, a business security level calculation program 131 (business security evaluation calculation part), a volume security level calculation program 132 (virtual pool security evaluation value calculation part), a volume allocation program 133 (virtual pool allocation part), a virtual pool management program 134 (virtual pool management part) and a virtual pool capacity monitoring program 135 (virtual pool management part) are read out from the storage device 12 and developed onto the memory 13 in the management server 1 (FIG. 1). Functions of these programs are implemented by being executed by the CPU 11 (FIG. 1). Functions of respective programs will be described in detail with reference to flowcharts shown in FIGS. 11 to 16.

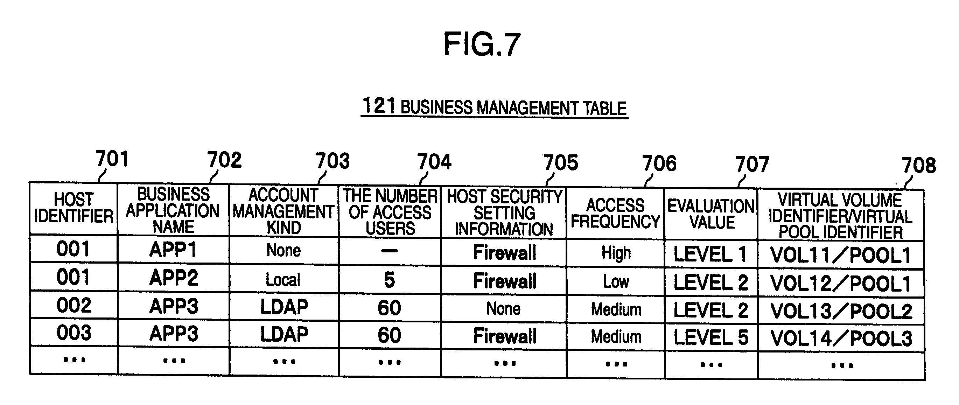

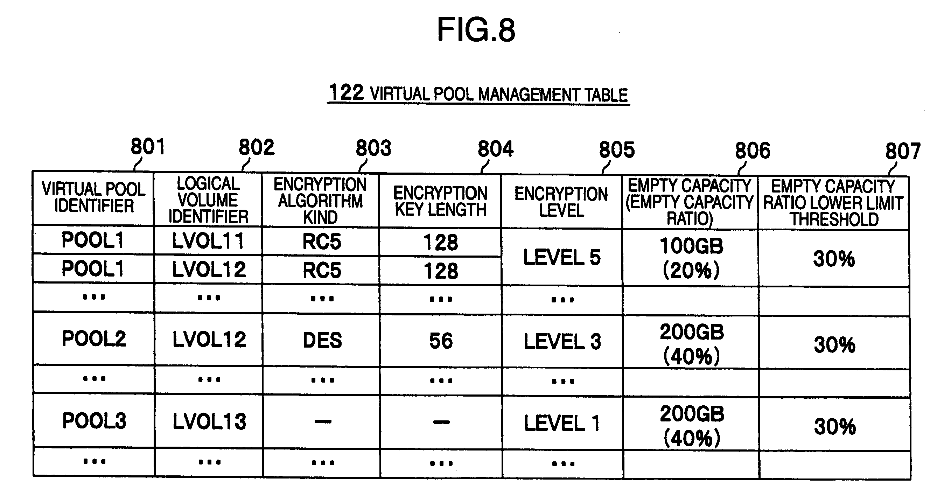

As shown in FIG. 2B, a business management table 121 which will be described later with reference to FIG. 7 and a virtual pool management table 122 which will be described later with reference to FIG. 8 are stored in the storage device 12.

### (Host configuration)

FIG. 3 is a diagram showing a configuration of the memory in the host according to the present embodiment.

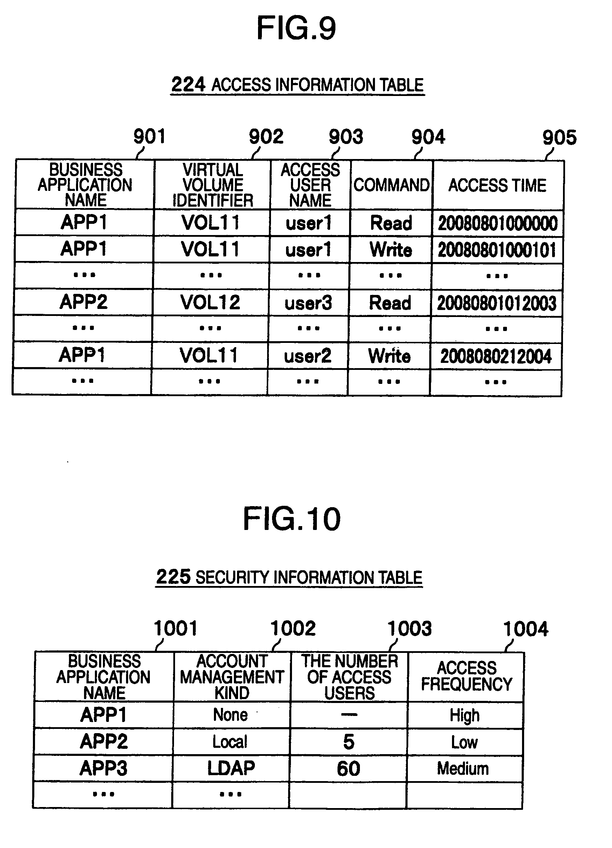

At least one business application program (hereafter referred to as "business application 221"), a security information collection program 222, and an operating system (OS 223) are developed on the memory 22 in each host 2. Functions of these programs are implemented by, for example, reading the programs 221 to 223 stored in the disk devices 35 (specifically logical volumes 301 (FIG. 4)) in the storage device 3 into the memory 22 in the host 2 and causing the CPU 21 (FIG. 1) to execute the programs 221 to 223. In addition, an access information table 224 which will be described later with reference to FIG. 9 and a security information table 225 which will be described later with reference to FIG. 10 are stored in the memory 22 in each host 2. In FIG. 3, the access information table 224 and the security information table 225 are in a state in which they are stored in the memory 22. However, this is not restrictive, but the access information table 224 and the security information table 225 may be stored in a storage device such as a HD (Hard Disk) or a flash memory.

The business application 221 is an application program which conducts, for example, web service, one's service record management service, or on-line service such as bank deposits or balance inquiries. The business application 221 provides various services by issuing an input/output command to logical volumes 301 in the storage device 3 (apparently, to the virtual volumes 303). Furthermore, if an access request to the storage device is issued, each business application 221 stores its information into the access information table 224 as a log.

### (Storage device configuration)

FIG. 4 shows a configuration of the storage device. FIG. 4 mainly shows a volume configuration, and a configuration of hardware such as the memory 33 and the CPU 32 (FIG. 1) is omitted.

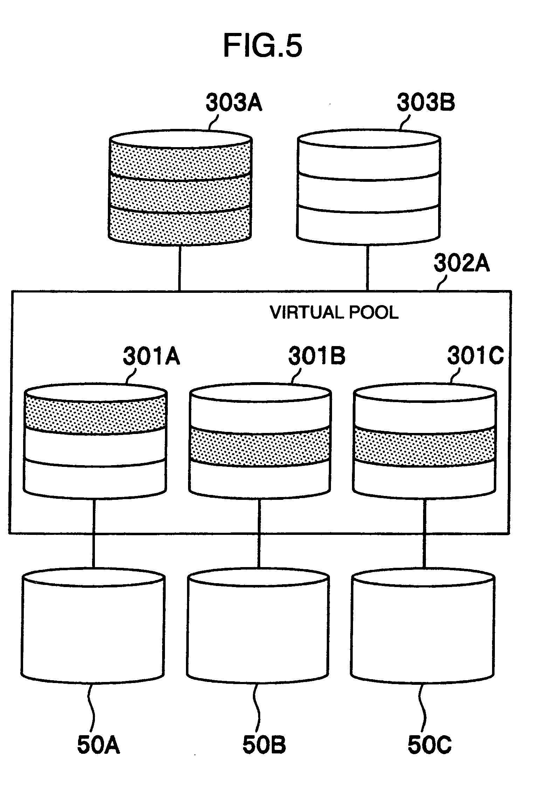

The controller 332 (FIG. 1) in the storage device 3 can form the logical volumes 301 which are logical storage area for the host 2 (FIG. 1) to access. It is desirable to constitute the logical volumes 301 so as to traverse a plurality of disk devices 35 by using the RAID technique. The controller 332 associates the logical volumes 301 with physical storage areas provided by the disk devices 35. The virtual pool 302 is handled as a storage pool which is formed of a plurality of logical volumes 301 and which has a capacity corresponding to the included logical volumes 301. In the example shown in FIG. 4, the virtual pool 302 is generated on one storage device. Alternatively, it is also possible to spread over a plurality of storage devices and form one virtual pool 302 of logical volumes in a plurality of storage devices 3. For example, it is possible to generate one "virtual pool A," which is not illustrated, from "logical volumes A to D," which are not illustrated. It is also possible to generate one "virtual pool B," which is not illustrated, from "logical volumes C to D," which are not illustrated. Logical volumes 301a are virtually stored into the virtual pool 302, and respective logical volumes 301a are associated with the actual logical volumes 301. Virtual volumes 303 are generated on the virtual pool 302, and the host 2 accesses the virtual volumes 303. As a matter of fact, the virtual volume 303 is formed of an arbitrary area of the logical volumes 301a included in the virtual pool 302. According to access from the host 2, the virtual volume 303 is allocated to corresponding logical volumes 301. As a result, the host 2 can read data. In other words, if the host 2 accesses a virtual volume 303 which is an apparent volume, then the controller 332 in the storage device 3 allocates logical volumes 301 to the virtual volume 303. As a result, data which is actually being read out from the logical volume 301 appears to the host 2 as if the data is being read out from the virtual volume 303. Detailed relations among the virtual volumes 303, the virtual pool 302, and the logical volumes 301 will be described later with reference to FIG. 5.

FIG. 5 shows an example of typical configurations of the virtual pool and the virtual volumes.

Logical volumes 301A to 301C (corresponding to the logical volumes 301a in FIG. 4) are associated with physical disks 50A to 50C, respectively. The physical disks 50A to 50C correspond to array groups which are set in the disk devices 35 shown in FIG. 4. In other words, the physical disks 50A to 50C are physical logical volumes 301. An area obtained by collecting these logical volumes 301 is a virtual pool 302A. A capacity of the virtual pool 302A becomes the sum total of capacities of the logical volumes 301A to 301C included in the virtual pool 302A. Virtual volumes 303A and 303B are generated by using areas in the virtual pool 302A. However, the virtual volumes 303A and 303B are not associated with the logical volumes 301A to 301C included in the virtual pool 302A in one-to-one correspondence. Each of the virtual volumes 303A and 303B is formed of a lump of areas obtained by dividing the logical volumes 301A to 301C into allocation units. In the example shown in FIG. 5, the virtual volume 303A is generated by collecting parts (shaded areas) of the logical volumes 301A to 301C. If the virtual volume 303A is allocated to the host 2 in this case, therefore, the host 2 uses only one volume. As for actual physical disks, parts of the physical disks 50A to 50C are used.

In the same way, parts of the logical volumes 301A to 301C (parts (not illustrated) of areas other than the shaded areas) are allocated to the virtual volume 303B.

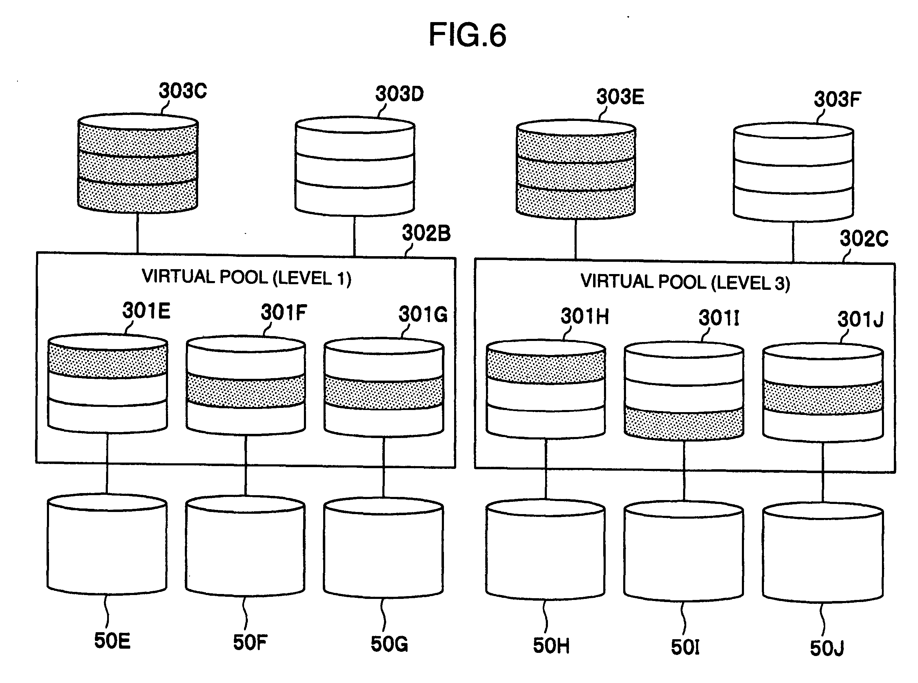

FIG. 6 shows an example of configurations of virtual pools and virtual volumes according to the present embodiment.

In FIG. 6, parts (shaded areas) of logical volumes 301E to 301G are allocated to a virtual volume 303C in the same way as FIG. 5. Parts of the logical volumes 301E to 301G (parts (not illustrated) of areas other than the shaded areas) are allocated to the virtual volume 303D. In the same way, parts (shaded areas) of logical volumes 301H to 301J are allocated to a virtual volume 303E. Parts of the logical volumes 301H to 301J (parts (not illustrated) of areas other than the shaded areas) are allocated to the virtual volume 303F.

FIG. 6 differs from FIG. 5 in that security levels are allocated to respective virtual volumes 303C to 303F.

It is necessary that the logical volumes 301E to 301G in a virtual pool 302B having a security level "LEVEL 1" are allocated to the virtual volumes 303C and 303D to be accessed by the business application 221 (FIG. 3) having the same security level "LEVEL 1." In addition, it is necessary that physical disks 50E to 50G having an encryption level of "LEVEL 1" set for them correspond to the logical volumes 301E to 301G.

In the same way, it is necessary that the logical volumes 301H to 301J in a virtual pool 302C having a security level "LEVEL 3" are allocated to the virtual volumes 303E and 303F to be accessed by the business application 221 having the same security level "LEVEL 3." In addition, it is necessary that physical disks 50H to 50J having an encryption level of "LEVEL 3" set for them correspond to the logical volumes 301H to 301J.

If a security level is thus set for each of the virtual volumes 303 in the storage device 3, then it is necessary to square security levels of the logical volumes 301 or physical volumes allocated to the virtual volume 303 with the security level of the virtual volume 303.

### «Tables»

Tables used in the present embodiment will now be described with reference to FIGS. 7 to 10 together with FIGS. 1 to 4.

### (Business management table)

FIG. 7 is a diagram showing an example of a business management table according to the present embodiment.

The business management table 121 is a table stored in the storage device 12 in the management server 1 to evaluate the security level of the business application 221. The management server 1 collects information of access of the host 2 to the business application 221 from the host 2, and uses the information as an index for evaluating the security level of the business application 221.

The business management table 121 stores a host identifier (column 701), a business application name (column 702), an account management kind (column 703), the number of access users (column 704), host security setting information (column 705), an access frequency (column 706), an evaluation value (column 707: business security evaluation value), and a virtual volume identifier/virtual pool identifier (column 708).

The host identifier in the column 701 represents an identifier which is given to each host 2 uniquely at least in the information processing system A. The business application name in the column 702 represents a name of the business application 221. The account management kind in the column 703 represents a kind of an account management method in the business application 221. The number of access users in the column 704 represents the number of users who access the business application 221. The host security information in the column 705 represents information concerning the security setting method of the host 2. The access frequency in the column 706 represents a frequency of access to the business application 221 conducted by the pertinent host 2. The evaluation value in the column 707 represents information calculated and stored according to a method which will be described later with reference to FIG. 11, and it indicates the security level. By the way, the evaluation value is made blank until processing which will be described later with reference to FIG. 11 is conducted. The virtual volume identifier/virtual pool identifier in the column 708 represents an identifier which is given to the virtual volume 303 and the virtual pool 302 uniquely at least in the information processing system A.

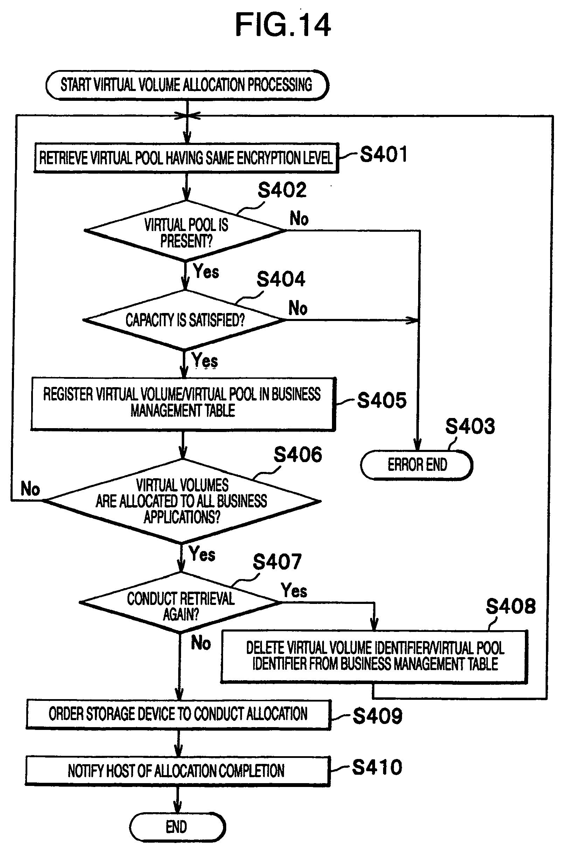

By the way, as for information such as the business application name (the column 702), the account management kind (the column 703), the number of access users (the column 704) and the access frequency (the column 706), the management server 1 collects information preset in the security information table 225 in each host 2. The host security setting information (column 705) represents information acquired directly from the host 2 by the management server 1. The virtual volume identifier/virtual pool identifier (column 708) represents information stored at step S405 in FIG. 14 which will be described later.

### (Virtual pool management table)

FIG. 8 is a diagram showing an example of a virtual pool management table according to the present embodiment.

The virtual pool management table 122 is a table stored in the storage device 12 in the management server 1 to evaluate the encryption level of the virtual pool 302. The management server 1 retrieves the logical volumes 301 in use every virtual pool 302, stores an encryption algorithm and an encryption key in the encryption function that the pertinent volume has in the virtual pool management table 122, and uses the encryption algorithm and an encryption key as an index of evaluation.

The virtual pool management table 122 stores a virtual pool identifier (column 801), a logical volume identifier (column 802), an encryption algorithm kind (column 803), an encryption key length (column 804), an encryption level (column 805: virtual pool security evaluation value), an empty capacity (column 806), and an empty capacity ratio lower limit threshold (column 807).

The virtual pool identifier in the column 801 and the logical volume identifier in the column 802 are identifiers given to the logical volume 301 described earlier with reference to FIG. 7 uniquely at least in the information processing system A. By the way, a plurality of logical volume identifiers are set for the same virtual pool identifier in some cases. The encryption algorithm kind in the column 803 represents a kind of the encryption algorithm in the disk devices 35 included in the logical volume 301. A name of the encryption algorithm such as RC (Rivest Cipher) 5 or DES (Data Encryption Standard) is stored therein. The encryption key length in the column 804 represents a key length of the encryption key. The encryption level in the column 805 represents a level of encryption in the logical volume 301. The management server 1 calculates encryption levels in all logical volumes 301 included in the virtual pool 302, puts them together, and stores resultant information in the column 804 as an encryption level for the virtual pool 302. The empty capacity in the column 806 and the empty capacity ratio lower limit threshold in the column 807 are information set by the management server 1 to monitor whether the capacity of the virtual pool 302 is sufficient. An empty capacity ratio is indicated in parentheses in the empty capacity in the column 806. The empty capacity ratio is a value which indicates percentage of the empty capacity in the pertinent virtual pool 302 to the whole of the virtual pool 302. As for the empty capacity ratio lower limit threshold, the management server 1 adds a logical volume 301 when the empty capacity has become equal to or less than the lower limit threshold.

### (Access information table)

FIG. 9 is a diagram showing an example of the access information table according to the present embodiment.

The access information table 224 is a table stored in the memory 22 or a storage device (not illustrated) in the host 2 to manage history of access of the host 2 to the business application 221. Upon accessing the business application 221, the host 2 registers information concerning an access object volume, an access user name, I/O command information, and access time in the access information table 224.

The access information table 224 stores information such as a business application name (column 901), a virtual volume identifier (column 902), an access user name (column 903), a command (column 904) and access time (column 905). The business application name in the column 901 represents a name of the business application 221 used by the host 2. The virtual volume identifier in the column 902 represents an identifier of a virtual volume 303 accessed by the host 2 (business application 221). The access user name in the column 903 represents a name of a user who has accessed. The command in the column 904 represents whether a command used at the time of access is write or read. The access time in the column 905 represents the date and hour when the host 2 has accessed the business application 221.

### (Security information table)

FIG. 10 is a diagram showing an example of the security information table 225 according to the present embodiment.

The security information table 225 is a table stored in the memory 22 or a storage device (not illustrated) in the host 2 to manage situations of access to the business application 221. The host 2 puts together situations of access to the business application 221 in a definite time period into the security information table 225 on the basis of the access information table 224.

A business application name (column 1001), an account management kind of the business application 221 (column 1002), the number of users who access the business application 221 (column 1003), and a frequency of access to the business application 221 (column 1004) are stored in the security information table 225, so as to be associated with each other.

Each information is information similar to that described with reference to FIGS. 7 to 9, and description thereof will be omitted.

The security information collection program 222 in the host 2 refers to the access information table 224 at definite periods and thereby sets the columns 1001 to 1004 in the security information table 225.

Hereafter, definition examples of the number of access users and access frequency will be described.

The number of access users: the number of users who accessed in an immediately preceding month

The access frequency is low: the number of times of access in an immediately preceding month is less than 10

The access frequency is middle: the number of times of access in an immediately preceding month is at least 10 and less than 100

The access frequency is high: the number of times of access in an immediately preceding month is at least 100

The access frequency is -: account management is not conducted

This definition may be stored, for example, in the memory 22 in the host 2 as a definition file and the security information collection program 222 may read out and execute the definition file. Or the security information collection program 222 may have the definition as definition by itself. The user can change setting of the definition file freely. As for, for example, the access frequency, therefore, it is also possible to totalize by using access for only writing. If the management server 1 sends the definition table to the host 2, then it is possible for the management server 1 to freely determine items and contents to be totalized.

By the way, the business application name (column 1001) in the security information table 225 may be set by a managing person of the host 2. Or the security information collection program 222 may collect the name of the installed business application 221 from the OS 223 and set by conducting communication with the OS 223.

Furthermore, upon receiving a transmission request of a predetermined item set in the security information table 225 from the management server 1, the security information collection program 222 sends information concerning a requested item in the pertinent security information table 225 to the management server 1. If totalization is conducted in the definition file as described above as to items other than items stored in the security information table 225 shown in FIG. 10, then the security information collection program 222 sends information of the items as well to the management server 1.

### «Flow charts»

Procedures of volume allocation methods according to the present embodiment will now be described with reference to flowcharts shown in FIGS. 11 to 16 together with FIGS. 1 to 4 and FIGS. 7 to 10.

### (Business management table registration processing)

FIG. 11 is a flowchart showing a flow of business management table registration processing according to the present embodiment.

The business security level calculation program 131 in the management server 1 collects information set in the security information table 225 in each host 2 together with a host identifier of a collection origin at definite periods, and registers the collected information in the business management table 121 (S101). At this time, information registered in the business management table 121 includes the business application name (the column 702), the account management kind (the column 703), the number of access users (the column 704) and the access frequency (the column 706). The business security level calculation program 131 in the management server 1 acquires the host identifier of the host 2 of the collection origin, and registers the host identifier in the column 701. By the way, registration in the column 8 will be described later.

Subsequently, the business security level calculation program 131 inquires of the OS 223 on the host 2, and registers acquired information in the business management table 121 (S102). At this time, the business security level calculation program 131 acquires the host security setting information (column 705) by using the business application name as a key, and registers the host security setting information in the column 701 in the business management table 121.

Subsequently, the business security level calculation program 131 calculates an evaluation value on the basis of information in respective items. In addition, the business security level calculation program 131 registers a security level obtained by classifying the sum of evaluation values into five stages, in the item (column 707) of the evaluation value in the business management table 121 as the evaluation value of the business application 221 (S103) .

Evaluation values of respective items are defined beforehand, for example, as follows.

Account management kind: none ··· 0, LDAP ··· 1, and local ··· 2

The number of access users: large ··· 0, middle ··· 1, and small ··· 2

Host security setting information: none ··· 0, firewall is already set ··· 2

Access frequency: high ··· 0, middle ··· 1, and low ··· 2

In this example, a value is set so as to become high as the access is restricted more heavily.

Every business application 221, the business security level calculation program 131 finds the sum of evaluation values for each of items by utilizing the definition, classifies the interval between its maximum value and its minimum value into five sections, and finds a pertinent level. And the business security level calculation program 131 registers the determined evaluation value in the evaluation value (column 707) in the business management table 121.

Definition of the evaluation value in each item can be set freely without being restricted to the above-described example. For example, weighting can be conducted by attaching importance to a specific item.

After the processing at the step S103, the business security level calculation program 131 makes a decision whether a preset definite time has elapsed (S104).

If it is judged that the definite time has not elapsed as a result of the decision at the step S104 (S104 → No), then the business security level calculation program 131 returns processing to the step S104.

If it is judged that the definite time has elapsed as a result of the decision at the step S104 (S104 → Yes), then the business security level calculation program 131 returns processing to the step S101.

### (Encryption level calculation processing of virtual pool)

FIG. 12 is a flowchart showing a flow of encryption level calculation processing in the virtual pool according to the present embodiment.

The volume security level calculation program 132 in the management server 1 collects information such as identifiers of logical volumes included in each virtual pool 302 and encryption information from the controller 332 in each storage device 3 at definite periods, and registers the collected information in the virtual pool management table 122 (S201). The information collected and registered at this time is information (columns 801 to 804, 806 and 807) other than the encryption level in the virtual pool management table 122.

Subsequently, the volume security level calculation program 132 calculates evaluation values on the basis of predetermined items in the virtual pool management table 122, calculates an encryption level of each virtual pool 302 selected from five stages on the basis of the sum of the evaluation values, and registers the encryption level in the item of the encryption level (column 805) in the virtual pool management table 122 (S202).

Evaluation values of respective items are defined beforehand, for example, as follows.

Encryption management kind: none ... 0, an encryption algorithm mentioned by various associations as an encryption algorithm having low reliability (such as, for example, LOK 197 or FEAL-8) ... 1, and an encryption algorithm adopted in cipher standards of each country ··· 2

Encryption key length: none ... 0, less than 128 bits ... 1, and at least 128 bits ... 2

In this example, a value is set so as to become high as the cipher is hard to break.

The volume security level calculation program 132 finds the sum of evaluation values for each of logical volume 301 included in the virtual pool 302 by utilizing the definition, classifies the interval between its maximum value and its minimum value into five sections, and determines a value pertinent to each section as an encryption level. And the volume security level calculation program 132 registers the determined encryption level in the encryption level (column 805) in the virtual pool management table 122. If an included logical volume 301 has a different encryption level, then the lowest value in the encryption level is set as the encryption level of the whole virtual pool 302.

Definition of the evaluation value in each item can be set freely without being restricted to the above-described definition. Furthermore, the method for calculating the encryption level of the virtual pool 302 is not restricted to the above-described method. For example, the encryption level may be calculated by another method such as conducting weighting.

The volume security level calculation program 132 makes a decision whether a preset definite time has elapsed (S203).

If it is judged that the definite time has not elapsed as a result of the decision at the step S203 (S203 → No), then the volume security level calculation program 132 returns processing to the step S203.

If it is judged that the definite time has elapsed as a result of the decision at the step S203 (S203 → Yes), then the volume security level calculation program 132 returns processing to the step S201.

Thereafter, the managing person registers the lower limit threshold of the empty capacity ratio in the column 807 in the virtual pool management table 122 via an input part.

It is desirable to make the evaluation value in the business application 221 calculated in FIG. 11 coincide with the evaluation value at an encryption level in the virtual pool 302 in the maximum value and minimum value. In other words, it is desirable to divide the evaluation value of the business application 221 and the encryption level of the virtual pool 302 with levels having the same number of stages.

### (Virtual volume allocation preprocessing)

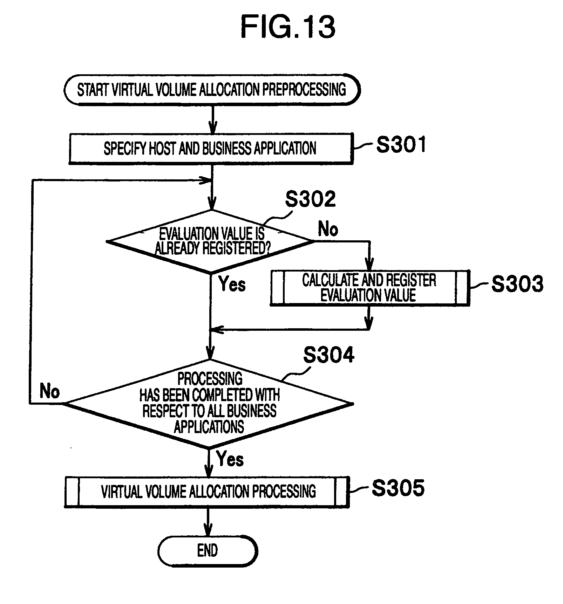

Processing of allocating the virtual volume 303 to the business application 221 conducted by the management server 1 will now be described with reference to FIGS. 13 and 14. In FIGS. 13 and 14, processing for allocating the virtual volume 303 to each business application 221 from a state in which every business applications does not have a virtual volume allocated thereto will be described.

First, preprocessing for processing of allocating the virtual volume 303 to the business application 221 will be described with reference to FIG. 13. The processing for allocating the virtual volume 303 to the business application 221 will be described with reference to FIG. 14.

FIG. 13 is a flowchart showing a flow of the virtual volume allocation preprocessing according to present embodiment.

First, the managing person inputs an order for starting the volume allocation program 133 via an input part which is not illustrated. Thereupon, the volume allocation program 133 is started. Upon being started, the volume allocation program 133 displays a screen for setting a host 2 and a business application 221 which becomes objects in allocation of a virtual volume, in a display device which is not illustrated. The user specifies a host 2 and a business application 221 to which a virtual volume 303 should be allocated via the input part (S301). As for the screen for specification, a list of names of the hosts 2 and the business applications 221 in the information processing system A is displayed. The managing person specifies a host 2 and a business application 221 from among them. By the way, the managing person can specify a plurality of hosts 2 and a plurality of business applications 221 at the step S301. Furthermore, at this time, an item for setting the capacity of the virtual pool 302 required for the business is also displayed on the screen for specification, and thereby the managing person specifies a capacity of the virtual pool 302 required for the business.

If a host 2 and a business application 221 are specified, then the volume allocation program 133 refers to the column 707 in the business management table 121 and makes a decision whether the evaluation value (security level) of the specified business application 221 is already registered (S302).

If it is judged that the specified business application 221 is not yet registered as a result of the decision at the step S302 (S302 → No), then the business security level calculation program 131 executes the processing shown in FIG. 11, calculates the evaluation value of the pertinent business application 221, and registers the evaluation value in the column 707 in the business management table 121 (S303), and the volume allocation program 133 proceeds to processing at step S304.

If it is judged that the specified business application 221 is already registered as a result of the decision at the step S302 (S302 → Yes), then the volume allocation program 133 makes a decision whether the processing of the steps S302 and S303 has been completed with respect to all business applications 221 specified at the step S301 (S304).

If it is judged that the processing is not completed as a result of the decision at the step S304 (S304 → No), then the volume allocation program 133 returns to the step S302, and executes processing of the steps S302 and S303 on the next business application 221.

If it is judged that the processing is completed as a result of the decision at the step S304 (S304 → Yes), then the volume allocation program 133 executes virtual volume allocation processing which will be described later with reference to FIG. 14 (S305) .

Since the virtual volume 303 is allocated to the business application 221, the virtual pool 302 is also allocated to the business application 221.

### (Virtual volume allocation processing)

FIG. 14 is a flow chart showing a flow of virtual volume allocation processing according to the present embodiment. FIG. 14 shows processing conducted at the step S305 shown in FIG. 13.

First, the volume allocation program 133 selects one from among business applications specified at the step S301 in FIG. 13. The selection method is, for example, an ascending order of names of the business applications 221. The volume allocation program 133 acquires the evaluation value of the selected business application 221 from the column 707 in the business management table 121. Subsequently, the volume allocation program 133 retrieves a virtual pool having the same encryption level as the acquired evaluation value (S401), and makes a decision whether such a virtual pool is present (S402). Specifically, the volume allocation program 133 refers to the column 805 in the virtual pool management table 122 by using the acquired evaluation value as a key, and makes a decision whether a virtual pool identifier having an encryption level which has the same value as the evaluation value is present. For example, if "LEVEL 1" is set as the evaluation value of the business application 221, then the volume allocation program 133 conducts retrieval to see whether a record of "LEVEL 1" is present in order from the top in the column 805 in the virtual pool management table 122, and conducts retrieval to see whether a virtual pool 302 is present.

If it is judged that a virtual volume 303 having the same encryption level is not present as a result of the retrieval (S402 → No), then the volume allocation program 133 causes the display part which is not illustrated and which is included in the management server 1 to conduct error display, and finishes the processing (S403). Or the volume allocation program 133 may conduct processing at step S404 and subsequent steps on virtual pools 302 having encryption levels which are higher in value than the evaluation value of the business application 221. Furthermore, the volume allocation program 133 may continue allocation to remaining business applications 221. In addition, the volume allocation program 133 may cause the user to set the capacity and evaluation value again with respect to the business application 221 resulting in an error, then conduct processing at the steps S401 and S402, and conduct the retrieval again.

If it is judged that a virtual volume 303 having the same encryption level is present as a result of the retrieval (S402 → Yes), then the volume allocation program 133 makes a decision whether the detected virtual pool 302 satisfies the capacity of the virtual pool 302 required for the business which is set at the stage of the step S301 in FIG. 13, by referring to the empty capacity (column 806) in the virtual pool management table 122 (S404).

If it is judged that the capacity is not satisfied as a result of the decision at the step S404 (S404 → No), then the volume allocation program 133 causes the display part which is not illustrated and which is included in the management server 1 to conduct error display, and finishes the processing (S403). At this time, the volume allocation program 133 may cause the display part which is not illustrated and which is included in the management server 1 to display a virtual pool 302 which does not satisfy the required capacity, but has another encryption level and inquire of the user whether to allocate to the virtual pool 302.

If it is judged that the capacity is satisfied as a result of the decision at the step S404 (S404 → Yes), then the volume allocation program 133 registers a corresponding virtual volume identifier/virtual pool identifier in the column 708 in the business management table 121 (S405). Specifically, the volume allocation program 133 acquires an identifier of a virtual volume 303 associated with a virtual pool 302 indicated by a virtual pool identifier judged to satisfy the capacity at the step S404, from the controller 332 in the storage device 3, and stores the acquired virtual volume identifier in association with the virtual pool identifier, in the column 708 in the business management table 121. By the way, the virtual volume 303 is not always associated with the virtual pool 302 in one-to-one correspondence as described above. Therefore, a plurality of virtual volume identifiers are acquired in some cases. At this time, the volume allocation program 133 selects, for example, a virtual volume identifier having a smaller number. As a result, the virtual volume 303 is allocated to the business application 221 which is the object.

Subsequently, the volume allocation program 133 makes a decision whether virtual volumes 303 are allocated to all business applications 221 specified at the step S301 in FIG. 13 (S406).

If it is judged that virtual volumes 303 are not allocated to all business applications 221 as a result of the decision at the step S406 (S406 → No), then the volume allocation program 133 returns processing to the step S401 and conducts processing at the steps S401 to S405 on the next business application 221.

If it is judged that virtual volumes 303 are allocated to all business applications 221 as a result of the decision at the step S406 (S406 → Yes), then the volume allocation program 133 displays a confirmation screen on a display device in the management server 1 which is not illustrated and makes a decision whether to conduct retrieval again (S407).

If a re-retrieval button on the confirmation screen is selected and input via an input device and consequently execution of re-retrieval is selected and input (S407 → Yes), then the volume allocation program 133 deletes a virtual volume identifier/virtual pool identifier from the column 708 in the business management table 121 (S408), returns processing to the step S401, thereby changes the condition and conducts re-retrieval. The change of the condition is, for example, exception of the virtual volume identifier/virtual pool identifier acquired at the step S405 from candidates.

If an OK button on the confirmation screen is selected and input via the input device and consequently non-execution of re-retrieval is selected and input (S407 → No), then the volume allocation program 133 acquires a virtual pool identifier (column 801) to be allocated to the business application 221 from the virtual pool management table 122, acquires a virtual volume identifier of an empty virtual volume in the pertinent virtual pool from the storage device 3, and acquires a port number of a host 2 which is an object of processing from the host 2. And the volume allocation program 133 sends an allocation order to the controller 332 in the storage device 3 by sending the acquired virtual volume identifier and port number of the host 2 (S409).

And the volume allocation program 133 notifies the object host 2 that allocation of the virtual volume 303 has been finished (S410), and finishes the processing.

The storage device 3 sets the sent virtual volume identifier and port number of the host 2 in the controller 332. Upon being notified of allocation of the virtual volume 303 by the management server 1, the host 2 sends a command to the storage device 3 to notify the storage device 3 of the virtual volume identifier together with the port number of the host 2. The controller 332 in the storage device 3 manages virtual volume identifiers and port numbers. Upon receiving the command giving the virtual volume identifier from the host 2, the controller 332 sends a virtual volume identifier associated with the port number to the host 2. As a result, the host 2 can acquire a virtual volume identifier which can be utilized in the storage device 3, and it becomes possible for the business application 221 to access the pertinent virtual volume 303.

In the processing shown in FIGS. 13 and 14, the user waits for input of a start order for the volume allocation program 133 via the input part which is not illustrated in the management server 1. Upon being started, however, the volume allocation program 133 always conducts retrieval of a virtual volume 303 which can be allocated. Alternatively, therefore, the processing shown in FIGS. 13 and 14 may be started without waiting for the managing person's order, when a virtual volume 303 which can be allocated is detected.

In the configuration, the evaluation value of the business application 221 is calculated. Alternatively, it is also possible to find an evaluation value by taking a file utilized by the business application 221 as the unit. In other words, it becomes possible for the business security level calculation program 131 to find the evaluation value by taking a file as the unit by adding file information as well to the access information table 224 shown in FIG. 9. For example, in the case where a plurality of files for one business application 221 are stored in separate virtual volumes 303, the business security level calculation program 131 collects the number of access users and access frequency by taking a file as the unit. As a result, an evaluation value for each file and data can be found, and a virtual volume 303 which meets the performance requested by the file or data can be allocated.

According to the processing shown in FIGS. 13 and 14, it is possible in the thin provisioning function to conduct allocation of physical disks (logical volumes 301) to the virtual pool with the encryption levels satisfied by the disks (logical volumes 301) taken into consideration.

### (Logical volume addition processing)

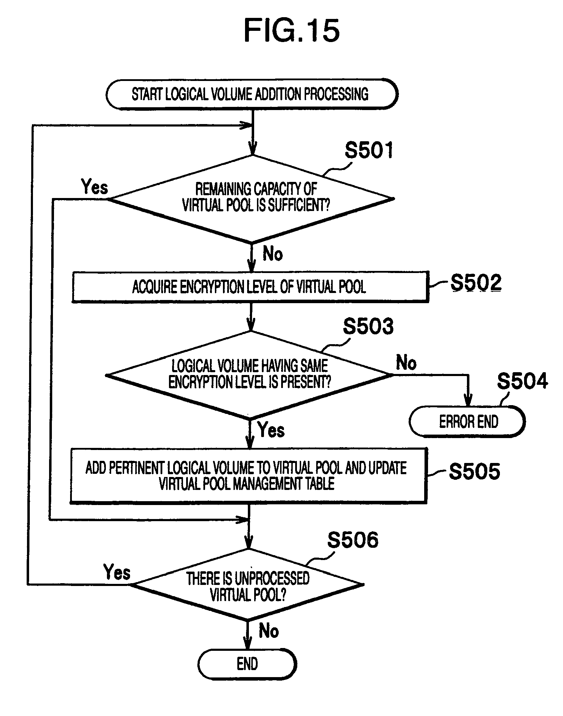

FIG. 15 is a flowchart showing a flow of logical volume addition processing according to the present embodiment.

If the capacity of the virtual pool 302 becomes insufficient, then the capacity of the virtual pool 302 is increased by newly allocating a logical volume 301 to the virtual pool 302. FIG. 15 shows this processing.

The virtual pool capacity monitoring program 135 makes a decision whether the remaining capacity of the virtual pool 302 is sufficient at definite periods (S501). Specifically, the virtual pool capacity monitoring program 135 monitors the empty capacity ratio (indicated within parentheses in the column 806) in the virtual pool management table 122 at definite periods, and makes a decision whether the empty capacity ratio has become less than the empty capacity ratio lower limit threshold (column 807). By the way, the processing shown in FIG. 15 is conducted, for example, in order from the top of the virtual pool management table 122.

If it is judged that the remaining capacity of the virtual pool 302 to be monitored is sufficient as a result of the decision at the step S501 (S501 → Yes), i.e., if the empty capacity ratio (column 806) in a record in the virtual pool management table 122 to be monitored is greater than the lower limit threshold of the empty capacity ratio (column 807), then the virtual pool management program 134 advances processing to step S506.

If it is judged that the remaining capacity of the virtual pool 302 is not sufficient as a result of the decision at the step S501 (S501 → No), i.e., if the empty capacity ratio (column 806) in a record in the virtual pool management table 122 to be monitored is less than or equal to the lower limit threshold of the empty capacity ratio (column 807), then the virtual pool management program 134 acquires an encryption level (column 805) of a virtual pool 302 which is insufficient in remaining capacity from the virtual pool management table 122 (S502).

And the virtual pool management program 134 inquires of the controller 332 in the storage device 3 whether there is an unused logical volume 301 having the same encryption level as the acquired encryption level (S503).

If the controller 332 in the storage device 3 sends a reply that there isn't a pertinent logical volume 301 as a result of the decision at the step S503 (S503 → No), then the virtual pool management program 134 causes the display device in the management server 1 which is not illustrated to conduct error display, and finishes the processing (error end) (S504).

If the controller 332 in the storage device 3 sends a reply that there is a pertinent logical volume 301 as a result of the decision at the step S503 (S503 → Yes), then the virtual pool management program 134 causes the controller 332 in the storage device 3 to add the pertinent logical volume 301 to the virtual pool 302 and update the virtual pool management table 122 (S505). Specifically, the virtual pool management program 134 acquires the logical volume identifier of the pertinent logical volume 301 from the controller 332 in the storage device 3. And the virtual pool management program 134 adds a new record to the virtual pool management table 122, and registers the virtual pool identifier to be monitored, the acquired logical volume identifier, and the encryption level acquired at the step S502 in the columns 801, 802 and 805 in the record. At this time, the virtual pool management program 134 inquires of the storage device 3, acquires the encryption algorithm kind of the logical volume 301 to be processed, and the encryption key length, and registers them in the columns 803 and 804 in the virtual pool management table 122. In addition, the virtual pool management program 134 calculates the empty capacity and empty capacity ratio of the virtual pool 302, and registers them in the column 806 in the virtual pool management table 122.

Thereafter, the virtual pool management program 134 orders the storage device 3 to add the pertinent logical volume 301 to the virtual pool 302. The controller 332 in the storage device 3 adds the pertinent logical volume 301 to the virtual pool 302 in accordance with the order. As a matter of course, the controller 332 in the storage device 3 conducts association of the logical volumes 301 with the virtual volumes 303.

And the virtual pool management program 134 makes a decision whether there is an unprocessed virtual pool 302 (S506).

If it is judged that there is an unprocessed virtual pool 302 as a result of the decision at the step S506 (S506 → Yes), then the virtual pool capacity monitoring program 135 conducts the processing at the step S501 again.

If it is judged that there isn't an unprocessed virtual pool 302 as a result of the decision at the step S506 (S506 → No), then the virtual pool management program 134 finishes the processing.

Even if the capacity of the virtual pool 302 becomes insufficient, it becomes possible for the management server 1 to automatically retrieve a logical volume 301 having the same security level and add the logical volume 301 according to the processing shown in FIG. 15.

### (Logical volume deletion processing)

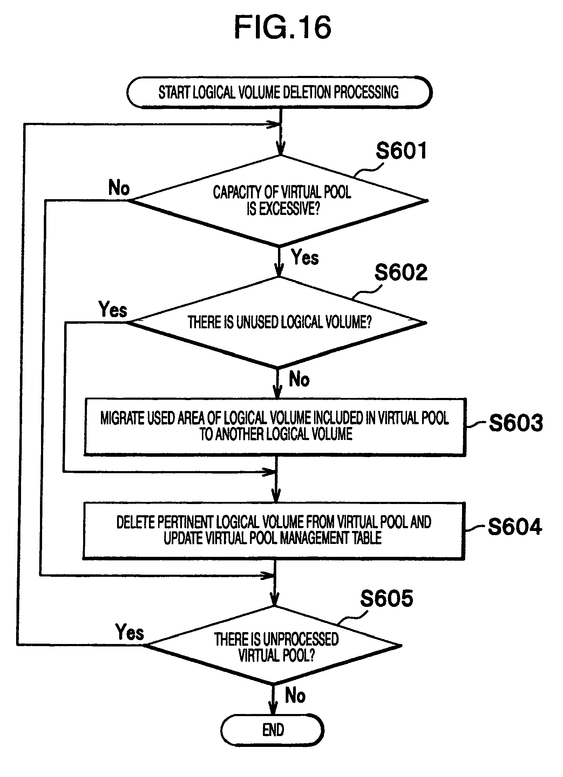

FIG. 16 is a flowchart showing a flow of logical volume deletion processing according to the present embodiment.

If the capacity of a specific virtual pool 302 is in excess and is used little, then a logical volume 301 is deleted from the virtual pool 302 to reduce the capacity of the virtual pool 302. FIG. 16 shows this processing. The processing shown in FIG. 16 may be conducted at definite time periods, or may be conducted in response to a user's order.

First, the virtual pool capacity monitoring program 135 makes a decision whether the capacity of the virtual pool 302 is excessive by a certain definite quantity (S601). This decision is made by setting a threshold in the same way as the capacity insufficiency. In other words, a used capacity ratio and a used capacity lower limit threshold which are not illustrated are previously registered in the virtual pool management table 122. The virtual pool capacity monitoring program 135 makes the decision at the step S601 by making a decision whether the used capacity ratio is less than or equal to the used capacity lower limit threshold. The virtual pool capacity monitoring program 135 may conduct the processing at the step S601 by making a decision whether the empty capacity ratio in the column 806 in the virtual pool management table 122 has become at least the upper limit threshold. By the way, the processing shown in FIG. 16 is conducted, for example, in order from the top in the virtual pool management table 122.

If it is judged that the capacity of the virtual pool 302 to be monitored is not excessive as a result of the decision at the step S601 (S601 → No), i.e., if the used capacity ratio in the object virtual pool 302 is greater than the lower limit threshold of the used capacity, then the virtual pool management program 134 advances processing to step S605.

If it is judged that the capacity of the virtual pool 302 to be monitored is excessive as a result of the decision at the step S601 (S601 → YesS), i.e., if the used capacity ratio is less than or equal to the lower limit threshold of the used capacity, then the virtual pool management program 134 acquires a list of logical volumes 301 included in this virtual pool 302 from the virtual pool management table 122, and makes a decision whether there is an unused logical volume 301 among them (S602).

The use situation of each logical volume 301 is managed by the controller 332 in the storage device 3. The management server 1 acquires the use situation of the logical volume 301 by inquiring of the controller 332 in the storage device 3.

If it is judged that there is an unused logical volume 301 as a result of the decision at the step S602 (S602 → Yes), then the virtual pool management program 134 advances the processing to step S604.

If it is judged that there isn't an unused logical volume 301 as a result of the decision at the step S602 (S602 → No), then the virtual pool management program 134 orders the controller 332 in the storage device 3 to migrate (move) a used area of a specific logical volume 301 included in the virtual pool 302 to an unused area of another logical volume 301 (S603), and generates an unused logical volume 301.

Subsequently, the virtual pool management program 134 deletes the unused logical volume 301 from the virtual pool 302, and updates the virtual pool management table 122 (S604). Specifically, the virtual pool management program 134 acquires a logical volume identifier of the pertinent unused logical volume 301 from the controller 332 in the storage device 3, and deletes a record in the business management table 121 having this logical volume identifier. In addition, the virtual pool management program 134 orders the storage device 3 to delete the unused logical volume 301 from the virtual pool 302, and the controller 332 in the storage device 3 deletes the pertinent logical volume 301 from the virtual pool 302 in accordance with the order.

After the step S604, the virtual pool management program 134 makes a decision whether there is an unprocessed virtual pool 302 (S605).

If it is judged that there is an unprocessed virtual pool 302 as a result of the decision at the step S605 (S605 → Yes), then the virtual pool capacity monitoring program 135 conducts the processing at the step S601 again.

If it is judged that there isn't an unprocessed virtual pool 302 as a result of the decision at the step S605 (S605 → No), then the virtual pool management program 134 finishes the processing.

If the capacity of the virtual pool 302 is excessive, then it becomes possible for the management server 1 to automatically retrieve an unused logical volume 301 in the virtual pool 302 and delete the unused logical volume 301 from the virtual pool 302 and efficient storage operation becomes possible, according to the processing shown in FIG. 16.

If the capacity of the virtual pool 302 is excessive, but there isn't an unused logical volume 301, i.e., if logical volumes 301 included in the virtual pool 302 are low in usage rate in the average, then efficient storage operation becomes possible by moving data in a specific logical volume 301 to another logical volume 301, thereby generating an unused logical volume 301, and deleting the generated unused logical volume 301 from the virtual pool 302.

According to the present embodiment, a virtual pool 302 can be generated so as to make the virtual pool 302, the virtual volume 303, the disk device 35 and the business application 221 coincide insecurity level with each other. Especially when using the thin provisioning function, a storage area in the storage device suitable for a security requirement demanded for the business application can be utilized.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A storage area allocation method in an information processing system including a plurality of host computers (2), a plurality of storage devices (3), and a management server (1) which allocates a predetermined storage area from among a plurality of storage areas included in the storage devices to a business application (221) executed in a host computer, wherein
the management server is adapted to:
calculate (131) a business security evaluation value (707) which is a security evaluation value of the business application executed in the host computer;
store the calculated business security evaluation value (707) and business application information (702) which is information concerning the business application in association with each other into a storage part (12, 121);
calculate (132) a storage area security evaluation value which is a security evaluation value of each storage area in the storage devices;
store the calculated storage area security evaluation value (805) and storage area information (801) which is information concerning the storage area in association with each other into the storage part (12, 122); and
compare (133) the business security evaluation value with the storage area security evaluation value, specify the storage area security evaluation value, and allocate a business application indicated by business application information corresponding to the business security evaluation value to the storage area on the basis of the storage area information corresponding to the specified storage area security evaluation value.

2. The storage area allocation method according to claim 1, wherein the management server is adapted to allocate a virtual pool (302) generated from a physical storage device in the storage devices to the business application as the storage area.

3. The storage area allocation method according to claim 1 or 2, wherein the management server is adapted to calculate the business security evaluation value on the basis of at least one of an account management method (703) of the business application, a host computer security setting method (705), a frequency of access (706) to the business application, and the number of access users (704).

4. The storage area allocation method according to claim 1, 2 or 3, wherein the management server is adapted to calculate the storage area security evaluation value on the basis of at least one of an encryption algorithm (803) and the number of bits of an encryption key (804) in an encryption function that the storage area has.

5. The storage area allocation method according to any one of the preceding claims, wherein
the management server is adapted to acquire a remaining capacity (806) of the storage area,
when the remaining capacity has become equal to or less than a preset predetermined value, the management server detects a storage area having the same storage area security evaluation value as that of the storage area having the remaining capacity which has become equal to or less than the predetermined value and adds the detected storage area to the storage area having the remaining capacity which has become equal to or less than the predetermined value.

6. The storage area allocation method according to any one of the preceding claims, wherein
the storage area is formed of a plurality of areas,
when a used capacity of the storage area has become less than or equal to a preset predetermined value,
if there is an unused area in the storage area having the used capacity which has become less than or equal to the preset predetermined value,
the management server deletes the unused area from the storage area.

7. The storage area allocation method according to claim 6, wherein
the management server further comprises a storage area management part (134), and
if there isn't an unused area in the storage area having the used capacity which has become less than or equal to the preset predetermined value,
the storage area management part moves data stored in a specific area included in the storage area to another area in the storage area and deletes an unused area obtained by the movement from the storage area.

8. The storage area allocation method according to any one of the preceding claims, wherein the management server is adapted to transmit storage area information allocated to the business application to the storage devices.

9. A management server (1) which allocates a predetermined virtual pool from among a plurality of virtual pools generated from physical storage devices in storage devices (3) to a business application (221) executed in a plurality of host computers (2), wherein the management server comprises:
a business security evaluation value calculation part (131) for calculating a business security evaluation value (707) which is a security evaluation value of the business application executed in the host computer, and storing the calculated business security evaluation value and information (702) concerning business application in association with each other into a storage part;
a virtual pool security evaluation value calculation part (132) for calculating a virtual pool security evaluation value (805) which is a security evaluation value of each virtual pool in the storage devices (12, 122) and storing the calculated virtual pool security evaluation value and virtual pool information (801) which is information concerning the virtual pool in association with each other into the storage part; and
a virtual pool allocation part (133) for comparing the business security evaluation value with the virtual pool security evaluation value, specifying the virtual pool security evaluation value, and allocating a business application indicated by business application information corresponding to the business security evaluation value to the virtual pool on the basis of the virtual pool information corresponding to the specified virtual pool security evaluation value.

10. The management server according to claim 9, wherein the business security evaluation value calculation part (133) further has a function of calculating the business security evaluation value on the basis of at least one of an account management method of the business application, a host computer security setting method, a frequency of access to the business application, and the number of access users.

11. The management server according to claim 9 or 10, wherein the virtual pool security evaluation value calculation part (132) has a function of calculating the virtual pool security evaluation value on the basis of at least one of an encryption algorithm and the number of bits of an encryption key in an encryption function that the virtual pool has.

12. The management server according to claim 9, 10 or 11, wherein
the virtual pool (302) is formed of a plurality of logical volumes (301),
the management server further comprises a virtual pool management part (135),
the virtual pool management part is adapted to acquire a remaining capacity of the virtual pool,
when the remaining capacity has become equal to or less than a preset predetermined value, the virtual pool management part detects a logical volume having the same virtual pool security evaluation value as that of the virtual pool having the remaining capacity which has become equal to or less than the predetermined value and adds the detected logical volume to the virtual pool having the remaining capacity which has become equal to or less than the predetermined value.

13. The management server according to claim 9, wherein
the virtual pool (302) is formed of a plurality of logical volumes (301),
the management server further comprises a virtual pool management part (135),
when a used capacity of the virtual pool has become less than or equal to a preset predetermined value,
if there is an unused logical volume in the virtual pool having the used capacity which has become less than or equal to the preset predetermined value,
the virtual pool management part deletes the unused logical volume from the virtual pool.

14. The management server according to claim 13, wherein
if there isn't an unused area in the virtual pool having the used capacity which has become less than or equal to the preset predetermined value,
the virtual pool management part (135) moves data stored in a specific logical volume included in the virtual pool to another logical volume and deletes an unused logical volume obtained by the movement from the virtual pool.

15. The management server according to any one of claims 9 to 14, wherein the virtual pool allocation part (133) further has a function of transmitting virtual pool information allocated to the business application to the storage devices (3).
